Europäisches Patentamt

European Patent Office

Office européen des brevets

(11) Publication number: 0 366 841
A1

# EUROPEAN PATENT APPLICATION

(21) Application number: 88310345.9

(51) Int. Cl.5: F16C 5/00

(22) Date of filing: 03.11.88

(43) Date of publication of application:
09.05.90 Bulletin 90/19

(84) Designated Contracting States:
DE FR GB IT NL

(71) Applicant: DRESSER-RAND COMPANY
Baron Steuben Place
Corning New York 14830(US)

(72) Inventor: Baumlin, Eric J.
432 Pine Street
Big Flats New York 14814(US)

(74) Representative: Slight, Geoffrey Charles et al
Graham Watt & Co. Riverhead
Sevenoaks Kent TN13 2BN(GB)

(54) A crosshead and crosshead pin coupling arrangement.

(57) The crosshead (12) is of a substantially box shape, having two parallel side walls (14, 16) right-angularly joined to two shoeplates (20, 22), and a transverse nose block (18), joined to common ends of the walls (14, 16) and shoeplates (20, 22), leaving one open end. The side walls (14, 16) have rectilinear recesses (16, 28) formed therein which face outwardly from the open end of the crosshead. The crosshead pin (32) has squared-off ends (34), these ends are received in the recesses (26, 28), and bolts (42) fasten them in the recesses (26, 28).

FIG. I

# A CROSSHEAD AND CROSSHEAD PIN COUPLING ARRANGEMENT

This invention pertains to means for coupling a connecting rod, in a reciprocating-motion machine, to a crosshead by means of a crosshead pin.

Coupling arrangements of the aforesaid type, as known in the prior art, commonly require tapered fits of the crosshead pin, offer no strengthening of the crosshead from the pin, and need to have the pin removed from the connecting rod in order to remove the crosshead.

It is an object of this invention to set forth an improved crosshead and crosshead pin coupling arrangement.

In accordance with one aspect, this invention provides a crosshead and crosshead pin coupling arrangement, comprising a crosshead, said crosshead having a pair of parallel, side walls, said walls having rectilinear recesses formed therein, and a crosshead pin, for coupling of a connecting rod to said crosshead, wherein ends of said pin are of rectilinear cross-section, and are nested in said recesses, and further including means, engaging said ends and said crosshead, fastening said ends in said recesses.

In accordance with a further aspect, this invention provides a crosshead and crosshead pin coupling arrangement, comprising a crosshead having a translation axis, and a crosshead pin, wherein said crosshead and said pin have means co-operative for coupling said pin to said crosshead, and said coupling means comprises means for effecting (a) a coupling engagement of said pin with, and (b) a decoupling of said pin from, said crosshead, only along said axis.

One way of carrying out the present invention will now be described in detail by way of example with reference to drawings which show one specific embodiment. In the drawings:

FIG. 1 is a perspective, exploded view of a coupling arrangement, according to the invention;

FIG. 2 is a side, elevational view of the coupling arrangement shown in Figure 1;

FIG. 3 is an end, elevational view taken from the left-hand side of Figure 2; and

FIG. 4 is a view, taken along section 4-4 of Figure 3, showing the crosshead in cross-section, but showing the pin in full line illustration.

With reference to the drawings, the coupling arrangement 10 comprises a crosshead 12 having a pair of parallel, side walls 14 and 16 which are joined, at common ends thereof, by a nose block 18. Above and below, the walls 14 and 16 are joined through shoeplates 20 and 22. The latter serve to guide the crosshead 12 in its reciprocation along axis 24. The walls 14 and 16, nose block 18, and shoeplates 20 and 22, then, define the crosshead 12 as of a generally box shape with one open side.

Walls 14 and 16 have rectilinear recesses 26 and 28 formed therein which open onto the open side of the crosshead 12. The walls 14 and 16 have tapped holes 30 formed therein, and opening onto the recesses 26 and 28, for crosshead pin retaining bolts to be received therein.

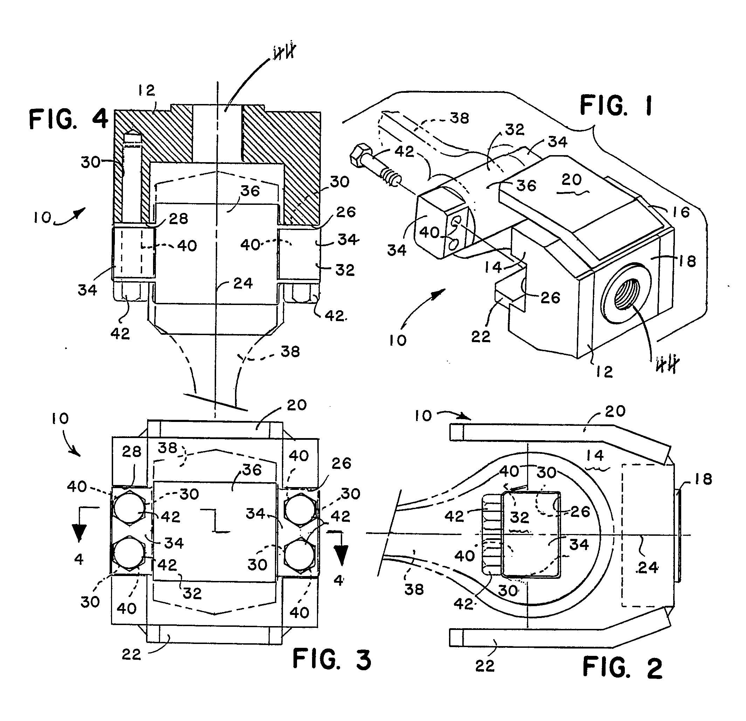

The crosshead pin 32 has rectangular ends 34 and an intermediate portion 36 of cylindrical configuration for receiving thereon the bored, reciprocable end of a connecting rod 38 (shown only in phantom). Ends 34 have bolt holes 40 formed therethrough. The ends 34 are nested in the recesses 26 and 28, and made fast therein by means of bolts 42, the latter are passed into the bolt holes 40 and torqued into the tapped holes 30. As can be seen in Figs. 1 and 4, the nose block 18 has a tapped hole 44 formed therein to receive a threaded end of a piston rod (not shown).

This arrangement 10 offers improvements in that it (a) eliminates taper fits for locking, such as are practiced in known designs, (b) unit loading is distributed to better balance the forces which the crosshead 12 must sustain during operation, and (c) it is easier to manufacture and install.

This bolted pin design has a dual purpose, it mounts the connecting rod 38 to the crosshead 12, and serves as a structural, member distributing and balancing incident forces to provide additional strength to the crosshead 12. As noted, it simplifies fabrication, and reduces the cost to manufacture. Further, the arrangement reduces the number of parts which need to be assembled, and offers a weight reduction in the crosshead 12 which provides for easier handling. Too, there are improved maintenance capabilities when servicing the associated equipment. Removal of the pin 32 from the connecting rod 38 is not necessary when removing crosshead 12 from the arrangement 10. The pin 32 is coupled to, and decoupled from the crosshead 12 only along axis 24.

## Claims

1. A crosshead and crosshead pin coupling arrangement (10), comprising a crosshead (12); said crosshead having a pair of parallel, side walls (14, 16); said walls having rectilinear recesses (26, 28) formed therein; and a crosshead pin (32), for coupling of a connecting rod (38) to said crosshead; wherein ends (34) of said pin are of rectilinear cross-section, and are nested in said recesses; and further including means (42), engaging said ends and said crosshead, fastening said ends in said recesses; and wherein said crosshead also has a nose block (18); said nose block is joined to ends of said side walls; and said nose block has means (44) formed therein for disengageably coupling thereto and end of a piston rod.

2. A crosshead and crosshead pin coupling arrangement, according to claim 1, wherein said crosshead (12) further has shoeplates (20, 22) joined to, and bridging between said walls (14, 16), for guiding said crosshead in reciprocation.

3. A crosshead and crosshead pin coupling arrangement, according to claim 2, wherein said crosshead (12) also has a nose block (18); and said nose block is joined to ends of said walls (14, 16).

4. A crosshead and crosshead pin coupling arrangement, according to claim 3, wherein said walls (14, 16), nose block (18), and shoeplates (20, 22) cooperatively define said crosshead as a hollow, right angularly-shaped box having one open side; and said pin (32) is set across said open side.

5. A crosshead and crosshead pin coupling arrangement, according to claim 1, wherein said ends (34) of said pin (32) have first bolt holes (40) formed therein; said walls (14, 16) have second bolt holes (30) formed therein; one of said first and second bolt holes (30) are tapped for threaded bolts; and said fastening means comprises bolts (42) in said bolt holes and fastened in said tapped holes (30).

6. A crosshead and crosshead pin coupling arrangement, according to claim 5, wherein it is said second bolt holes (30) which are tapped for said bolts.

7. A crosshead and crosshead pin coupling arrangement, according to claim 1, wherein not more than approximately half of said pin ends (34) are nested in said recesses (26, 28).

8. A crosshead and crosshead pin coupling arrangement, according to claim 4, wherein portions of said shoeplates (20, 22) project, in cantilever fashion, from said open side of said crosshead (12).

9. A crosshead and crosshead pin coupling arrangement; according to claim 1, wherein said pin (32) has an intermediate portion, i.e., a portion subsisting between said ends (34) thereof, which is of cylindrical cross-section.

10. A crosshead and crosshead pin coupling arrangement (10), comprising a crosshead (12) having a translation axis (24) and a crosshead pin (32); wherein said crosshead and said pin have means (26, 28, 30, 40, 42) cooperative for coupling said pin and said crosshead together; and said coupling means comprises means for effecting a decoupling disengaging of said crosshead from said pin, only along said axis.

FIG. 4

FIG. 1

FIG. 3

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C- 177 422 (STOECKENIUS)<br>* Whole document * | 10 | F 16 C 5/00 |
| A | | 1 | |
| A | US-A-3 011 812 (WARMING)<br>* Whole document * | 1 | |
| A | DE-C- 348 658 (HIRTH)<br>* Figures 1-3 * | 1 | |
| A | US-A-1 845 110 (WRIGHT)<br>* Whole document * | 1 | |
| A | FR-A- 642 566 (EHRHARDT)<br>* Figure 1 * | 1,8 | |

TECHNICAL FIELDS SEARCHED (Int. Cl.5)

F 16 C

The present search report has been drawn up for all claims

| Place of search | Date of completion of the search | Examiner |
|---|---|---|
| THE HAGUE | 21-06-1989 | ORTHLIEB CH.E. |

EPO FORM 1503 03.82 (P0401)